# EUROPEAN PATENT APPLICATION

(11) **EP 2 312 557 A1**
(43) Date of publication of application: **20.04.2011**
(21) Application number: 10803820.9
(22) Date of filing: 31.01.2010
(51) Int. Cl.: G09F 3/02, G06K 19/07

(54) **HEAT TRANSFER ELECTRONIC RADIO FREQUENCY IDENTIFICATION TAG**

(30) Priority: 28.07.2009 CN 200920061372 U
(71) Applicant: Dong Guan U.R. Label & Printing Co., Ltd, Guangdong 523867 (CN)
(72) Inventor: LAU, Wing Shun, Guangdong 523867 (CN)
(74) Representative: Vandeberg, Marie-Paule L.G.
(86) International application number: PCT/CN2010/070442
(87) International publication number: WO 2011/011987

(57) **Abstract**

The present invention relates to the filed of the radio frequency identification (RFID) tag technology, and particularly to a heat transfer printing electronic RFID tag, which includes a substrate, a release layer and a RFID tag, the release layer adhering to the substrate. The RFID tag adheres to the release layer through a heat-melting adhesive layer and a dye ink layer with protect function is set on the RFID tag. In the present invention, a dye ink layer is provided on the RFID tag and the dye ink layer may protect the RFID tag, such that the RFID tag may be prevented from suffering outside eroding, for example, it has high waterproof performance; in addition, the designer may design various brand mark patterns and other pattern information, and then print them on the dye ink layer using various colors without the limitation of the RFID tag

## Description

### Field of the Invention

The present invention relates to the filed of the radio frequency identification (RFID) tag technology, and particularly to a heat transfer printing electronic RFID tag.

### Background of the Invention

Recently, the Radio Frequency Identification (RFID) technology for tracking the level of a single product develops faster and faster due to increasing of the application occasions. RFID is an automatic identification technology through which we can track the product easily. The participation of people decreases during tracking of the goods because of this technology, so that the technology results in large decrease of expense for personnel in the logistics management. There may be many kinds of applications for the RFID in different cases, such as the single product identification and retail management. This technology may be used to perform positioning for different products. Because of the advantage of low cost, the passive ultra high frequency RFID tag is applied to the costume inventory management. A RFID system is composed of a transmitter and a receiver, such as a RFID tag and a RFID reader. It is the object of the RFID system to enable the RFID reader to read the RFID tag successfully. In general, a passive RFID has no power supply. Therefore, the power for driving the RFID chip comes from the signal transmitted by the reader. The RFID reader transmits a modulation signal to the tag and then the tag returns a signal with an identity number of the tag to the reader. A passive RFID tag is mainly composed of an antenna and a RF chip. The RF chip has a storage for storing the identity number therein. Compared with the conventional bar code, the RFID brand mark has an advantage in that information may be read remotely and multiple brand marks may be read simultaneously. Because of push by some big costume manufacturers and distributors, such as Martha, Lacoste, Calvin Klein and Burberry, the RFID technology increases the efficiency of logistics management effectively and reduces the operation cost of these companies. The existing RFID brand mark is a brand mark based on the PET thin film and pressure-sensitive adhesive. However, there are some disadvantages difficult to be overcome for the pressure-sensitive brand marks: first, since the conversion of the high pressure-sensitive adhesive is complicated, the pressure-sensitive adhesive RFID brand mark has a high cost; second, since the antenna pattern on the RFID brand mark will damage the tag design, such RFID brand mark has not been accepted widely by the tag designer; third, such brand mark can not resist abominable conditions, such as being washed by water. Therefore, it is now considerably required that a RFID brand mark with good reliability as a part of the brand mark design is developed.

### Summary of the Invention

The object of the present invention is to provide a heat transfer printing electronic RFID tag to overcome the disadvantages present in the prior art. In the heat transfer printing electronic RFID tag, a dye ink layer is provided on the RFID tag and the dye ink layer may protect the RFID tag. In addition, the designer may set a brand mark and then print it on the dye ink layer.

To realize the above object, the present invention uses the technical solution as follows.

A heat transfer printing electronic RFID tag includes a substrate, a release layer and a RFID tag. The release layer adheres to the substrate, the RFID tag adheres to the release layer through a heat-melting adhesive layer and the dye ink layer with protect function is set on the RFID tag.

A pattern printing layer is set on the dye ink layer.

The dye ink layer has the same covering area as that of the RFID tag.

The dye ink layer has a bigger covering area than that of the RFID tag.

The dye ink layer has the same covering area as that of the substrate.

The present invention has the following beneficial effects. In the present invention, a dye ink layer is provided on the RFID tag and the dye ink layer may protect the RFID tag, such that the RFID tag may be prevented from suffering outside eroding, for example, it has high waterproof performance; in addition, the designer may design various brand mark patterns and other pattern information, and then print them on the dye ink layer using various colors without the limitation of the RFID tag.

### Brief Description of the Drawings

Figure 1 is a schematic plan view illustrating the structure according to the embodiment 1 of the present invention;

Figure 2 is a sectional view along the line A-A of Figure 1;

Figure 3 is a schematic plan view illustrating the structure according to the embodiment 2 of the present invention;

Figure 4 is a sectional view along the line B-B of Figure 3.

### Detailed Description of the Embodiments

The present invention will be described in detail with reference to the figures.

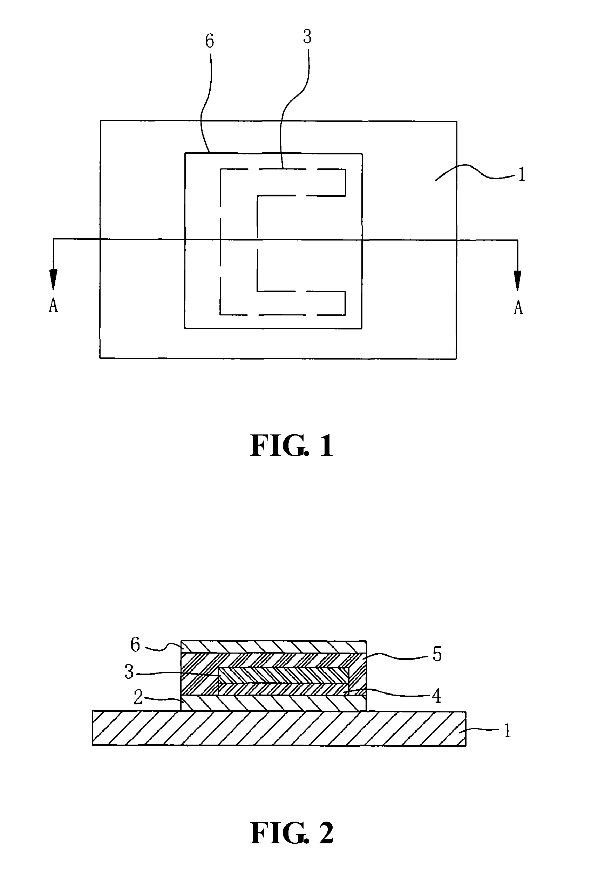

Figures 1 and 2 illustrate a heat transfer printing electronic RFID tag according to the embodiment 1 of the present invention which includes: a substrate 1, a release layer 2 and a RFID tag 3. The release layer 2 adheres to the substrate 1, the RFID tag 3 adheres to the release layer 2 through a heat-melting adhesive layer 4. A dye ink layer 5 with protect function is set on the RFID tag 3. The dye ink layer 5 has the same covering area as that of the RFID tag 3, a pattern printing layer 6 is set on the dye ink layer 5, and the pattern printing layer 6 may be various brand mark patterns.

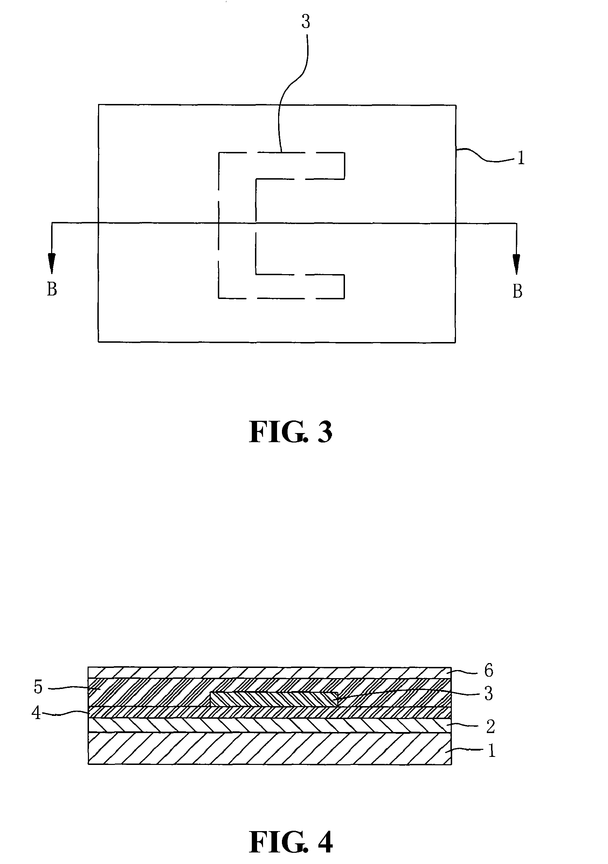

Figures 3 and 4 illustrate the embodiment 2 of the present invention which is different from the embodiment 1 in that the dye ink layer 5 has the same covering area as that of the substrate 1. The bigger the area of the dye ink layer 5, the bigger the area for printing, which enables the designer to operate in a bigger space. Remain structure is the same as the embodiment 1 and description thereof will be omitted.

The embodiments described above are merely the preferred embodiments and do not intend to limit the implement scope of the present invention, therefore the variation and modification made in accordance with the construction, feature and principle within the patent scope of the present patent application fall into the scope of the present patent application.

## Claims

1. A heat transfer printing electronic radio frequency identification (RFID) tag, comprising a substrate, a release layer and a RFID tag, the release layer adhering to the substrate, wherein the RFID tag adheres to the release layer through a heat-melting adhesive layer and a dye ink layer with protect function is set on the RFID tag.

2. The heat transfer printing electronic RFID tag according to claim 1, wherein a pattern printing layer is set on the dye ink layer.

3. The heat transfer printing electronic RFID tag according to claim 1, wherein the dye ink layer has the same covering area as that of the RFID tag.

4. The heat transfer printing electronic RFID tag according to claim 1, wherein the dye ink layer has a bigger covering area than that of the RFID tag.

5. The heat transfer printing electronic RFID tag according to claim 4, wherein the dye ink layer has the same covering area as that of the substrate.
